# EUROPEAN PATENT APPLICATION

(11) **EP 4 738 926 A1**
(43) Date of publication of application: **06.05.2026**
(21) Application number: 24830472.7
(22) Date of filing: 11.06.2024
(51) Int. Cl.: H04W 36/08

(54) **MOBILITY MANAGEMENT METHOD, COMMUNICATION APPARATUS, AND STORAGE MEDIUM**

(30) Priority: 29.06.2023 CN 202310787422
(71) Applicant: ZTE Corporation, Shenzhen, Guangdong 518057 (CN)
(72) Inventor: DAI, Qian, Shenzhen, Guangdong 518057 (CN); LI, Ping, Shenzhen, Guangdong 518057 (CN); CUI, Yijun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/098399
(87) International publication number: WO 2025/001826

(57) **Abstract**

Provided are a mobility management method, a communication apparatus, and a storage medium. The mobility management method comprises: determining a terminal device allowed to be handed over to a third node; and sending a handover instruction to the terminal device allowed to be handed over to the third node, wherein the handover instruction is used for instructing to hand over the terminal device from a first node to the third node.

## Description

The present disclosure claims priority to Chinese Patent Application No. 202310787422.7, filed on June 29, 2023, which is hereby incorporated by reference in its entirety.

### TECHNICAL FIELD

The present disclosure relates to the technical field of communications, and in particular, to mobility management method, a communication apparatus, and a storage medium.

### BACKGROUND

A reconfigurable intelligent surface (RIS) is an artificial electromagnetic material with programmable electromagnetic properties, which includes a large number of low-cost reflection arrays. By controlling a phase and an amplitude of each array, a direction of an outgoing beam for focusing may be adjusted, thereby changing a propagation path of electromagnetic waves and implementing control over the wireless network environment.

The deployment manner for RIS is usually to deploy one or more dedicated RISs within a coverage area of a single base station, so as to improve signals of coverage blind spots within the coverage area of the base station. In certain special scenarios, RIS may be deployed on a mobile vehicle, so as to provide signal relay and coverage for a user inside the vehicle. For example, in a high-speed train, it is necessary to deploy a transmissive RIS on the windows to reflect beams from a base station into the space inside the carriage.

### SUMMARY

In one aspect, a mobility management method is provided, which is applied to a first node. The mobility management method includes: determining a terminal device that is allowed to perform handover to a third node; and sending a handover instruction to the terminal device, where the handover instruction is used to indicate the terminal device to perform handover from the first node to the third node.

In another aspect, a mobility management method is provided, which is applied to a second node. The mobility management method includes: receiving second indication information sent from a first node; where the second indication information is used to indicate to change a codebook for a target reflection module included in the second node to a target codebook; and changing the codebook for the target reflection module to the target codebook according to the second indication information.

In yet another aspect, a management apparatus is provided, which is applied to a first node. The management apparatus includes: a determination module, configured to determine a terminal device that is allowed to perform handover to a third node from terminal devices accessing to the first node via a second node; and a handover module, configured to send a handover instruction to the terminal device that is allowed to perform handover to the third node, where the handover instruction is used to indicate to perform handover from the first node to the third node.

In yet another aspect, a management apparatus is provided, which is applied to a second node. The management apparatus includes: a receiving module, configured to receive second indication information sent from a first node; where the second indication information is used to indicate to change a codebook for a target reflection module included in the second node to a target codebook; and a change module, configured to change the codebook for the target reflection module to the target codebook according to the second indication information.

In yet another aspect, a communication apparatus is provided. The communication apparatus includes: a memory and a processor, where the memory and the processor are coupled; the memory is configured to store computer programs; and the processor, upon executing the computer programs, implements the mobility management method according to any of the above-mentioned aspects.

In yet another aspect, a computer-readable storage medium is provided. The computer-readable storage medium stores computer program instructions, where the computer program instructions, upon being executed by a processor, enable the processor to implement the mobility management method according to any of the above-mentioned aspects.

In yet another aspect, a computer program product is provided. The computer program product includes computer program instructions, where the computer program instructions, upon being executed by a processor, enable the processor to implement the mobility management method according to any of the above-mentioned aspects.

### BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of an architecture of a communication system according to some embodiments of the present disclosure.
FIG. 2 is a structural schematic diagram of a base station according to some embodiments of the present disclosure.
FIG. 3 is a structural schematic diagram of a relay reflection device according to some embodiments of the present disclosure.
FIG. 4 is a schematic diagram of a structural form of a relay reflection device according to some embodiments of the present disclosure.
FIG. 5 is a schematic diagram of a structural form of another relay reflection device according to some embodiments of the present disclosure.
FIG. 6 is a schematic diagram of an application scenario of a communication system according to some embodiments of the present disclosure.
FIG. 7 is a schematic diagram of an application scenario of another communication system according to some embodiments of the present disclosure.
FIG. 8 is a schematic diagram of an application scenario of yet another communication system according to some embodiments of the present disclosure.
FIG. 9 is a flowchart of a mobility management method according to some embodiments of the present disclosure.
FIG. 10 is a flowchart of another mobility management method according to some embodiments of the present disclosure.
FIG. 11 is a flowchart of yet another mobility management method according to some embodiments of the present disclosure.
FIG. 12 is a flowchart of yet another mobility management method according to some embodiments of the present disclosure.
FIG. 13 is a schematic diagram of an application scenario of a mobility management method according to some embodiments of the present disclosure.
FIG. 14 is a schematic diagram of an application scenario of another mobility management method according to some embodiments of the present disclosure.
FIG. 15 is a structural schematic diagram of a management apparatus according to some embodiments of the present disclosure.
FIG. 16 is a structural schematic diagram of another management apparatus according to some embodiments of the present disclosure.
FIG. 17 is a structural schematic diagram of yet another management apparatus according to some embodiments of the present disclosure.
FIG. 18 is a structural schematic diagram of a communication apparatus according to some embodiments of the present disclosure.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that in the present disclosure, wordings, such as "exemplarily" or "for example" and variations thereof are used to indicate examples, instances, or illustrations. Any embodiment or design solution described as "exemplarily" or "for example" in the present disclosure should not be illustrated as being more preferred or advantageous over other embodiments or design solutions. Specifically, the usage of the wordings such as "exemplarily" or "for example" is intended to present related concepts in a concrete way.

Hereinafter, terms such as "first" and "second" are used for descriptive purposes only, but are not to be understood as indicating or implying the relative importance or implicitly indicating the number of indicated technical features. Thus, features limited with wordings like "first" or "second," etc., may explicitly or implicitly include one or more of the feature(s).

In the description of the present disclosure, unless otherwise specified, a character "/" means an "or" relationship, for example, "A/B" may represent A or B. The "and/or" herein is merely an association relationship for describing associated objects, and used for indicating that there may be three relationships, for example, A and/or B may represent: only A; only B; or both A and B. In addition, "at least one" means a number of one or more, and "plurality" means a number of two or more.

With the explosive growth of data traffic, the millimeter wave (mmWave) communication has become a key technology for fifth generation mobile communication due to its abundant available frequency bands. The first serious challenge in implementing the mmWave communication is path loss. In order to compensate for the severe path loss of mmWaves during transmission, a millimeter wave base station (BS) usually uses a large scale of antenna arrays for narrow beam transmission, which may effectively concentrate the transmission energy in a certain area or direction. However, directional transmission for millimeter waves is highly sensitive to blockage, which may even cause connection interruptions, posing new challenges for establishing and maintaining millimeter wave links. For this purpose, devices (such as the RIS and network controlled repeater (NCR)) with functions of signal forwarding and relay are integrated into a millimeter wave cellular system.

A RIS is an artificial electromagnetic material with programmable electromagnetic properties, which includes a large number of low-cost reflection arrays. By controlling a phase and an amplitude of each array, a direction of an outgoing beam for focusing may be adjusted, thereby changing a propagation path of electromagnetic waves and implementing control over the wireless network environment.

For a traditional wireless technology, signal processing may generally be performed at a transmitter or receiver, so as to adapt to dynamic and uncontrollable wireless network environments, while the RIS may actively correct wireless channels through controllable intelligent signal reflection technology. Therefore, the RIS provides new degrees of freedom for improving the wireless link performance, and paves the way for the implementation of intelligent programmable wireless environments. For example, in the millimeter wave cellular system, blockage problem for wireless channels caused by factors such as terrain or obstacles may seriously reduce the communication quality, and even cause link interruptions. The RIS, with its ability to change the electromagnetic wave transmission environment, has the potential to become a new manner for dealing with the millimeter wave communication blockage problem. For a user whose link with a base station is blocked, phase adjustment of RIS may be used to enable the transmission path of electromagnetic waves to bypass obstructions and reach the user, thereby improving the communication quality and the coverage capability of millimeter wave systems.

The deployment manner for RIS is usually to deploy one or more dedicated RISs within a coverage area of a single base station, so as to improve signals of coverage blind spots within the coverage area of the base station. In certain special scenarios, RIS may be deployed on a mobile vehicle, so as to provide signal relay and coverage for a user inside the vehicle. For example, in a high-speed train, it is necessary to deploy a transmissive RIS on the windows to reflect beams from a base station into the space inside the carriage. Movement of the vehicle may cause movement of the RIS, which in turn leads to a continuous change in the relative position relationship between the RIS and the roadside base station antenna, resulting in a continuous change in the angular relationship between an incident beam and an outgoing beam of the RIS. In this way, it will cause the RIS's outgoing beam to be unable to stably cover the UE inside the vehicle, resulting in significant fluctuations in the signal quality of the UE.

At the same time, the movement of the RIS also brings new problems to the mobility performance of the user served by the RIS. When a mobile vehicle crosses an overlapped coverage area of two roadside base stations, if the RIS cannot adjust a reflection beam from a source base station beam to a target base station beam in a timely and accurate manner, it cannot guarantee that the UE served by the RIS relay in the carriage is capable of timely discovering the target base station and complete the handover process, which may increase a failure rate of UE handover in the carriage.

For example, in a case where the UE in the mobile vehicle performs a handover process, the following issues may occur.
1. During a process of crossing stations, before the RIS switches to a target cell beam, the UE may only detect a target cell beam that has been attenuated after penetrating the vehicle cabin, and cannot detect a target cell beam reflected by the RIS. Therefore, it is impossible to accurately determine whether a current environment meets a handover standard, and the UE may not be able to perform handover in time, resulting in radio link failure (RLF).
2. During a process of crossing stations, after the RIS switches to the target cell beam (i.e., the target cell beam reflected by RIS at the beginning), the UE may only detect a source cell beam that has been attenuated after penetrating the vehicle cabin. Therefore, the UE may not be able to complete a pre-process for handover (including UE completing measurements for the source cell and target cell and reporting a measurement report to the source cell, source cell and target cell completing handover preparation, and UE receiving a handover command sent from the source cell) with a source cell, resulting in handover failure.

In summary, there are some problems within some technologies: in a scenario where the RIS is deployed on a mobile vehicle, a failure rate for a UE in the vehicle to perform cell handover is too high.

In response to the above-mentioned technical problem, a mobility management method is provided in the embodiments of the present disclosure. The approach is to enable a plurality of terminal devices under the coverage of the second node to perform preparation for handover in advance and acquire an access configuration of the third node before the second node changes a codebook. Then, after the second node changes the codebook (at which point a reflection module of the second node begins to relay a signal of the third node), the terminal devices may then access to the third node. In this way, in the scenario where the second node is deployed on the mobile vehicle, a success rate for a terminal device in the vehicle to perform cell handover may be improved.

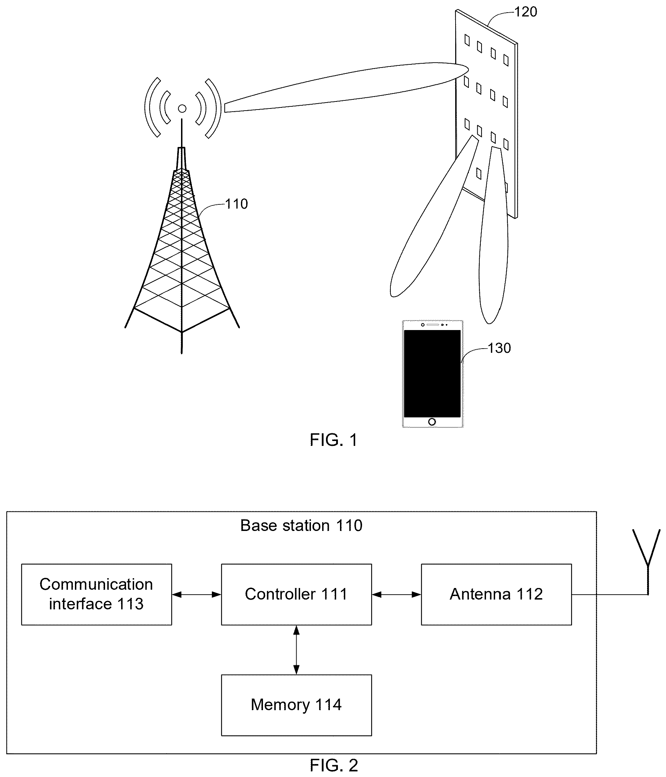

As shown in FIG. 1, it is a schematic diagram of an architecture of a communication system provided in the embodiments of the present disclosure. As shown in FIG. 1, the communication system includes: a base station 110, a relay reflection device 120, and a terminal device 130.

The base station 110 is configured to transmit and receive electromagnetic waves.

Exemplarily, the base station 110 may be a next generation Node B (gNB).

In some embodiments, as shown in FIG. 2, the base station 110 includes: a controller 111 and an antenna 112. The controller 111 is configured to manage a wireless communication interface and a wireless channel. The antenna 112 is configured to transmit and receive electromagnetic waves.

Exemplarily, the antenna 112 may emit electromagnetic waves to the relay reflection device 120 according to the control of the controller 111.

In some embodiments, the base station 110 may further include a communication interface 113 for exchanging information with other devices. Exemplarily, the base station 110 may exchange information with the relay reflection device 120 through the communication interface 113. The base station 110 may further exchange information with other devices (such as a network server) through the communication interface 113.

In some embodiments, the base station 110 may further include a memory 114 for storing data. For example, the memory 114 may be configured to store codebooks.

Exemplarily, the memory 114 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The relay reflection device 120 is configured to relay or forward electromagnetic waves emitted by the base station 110.

For example, the relay reflection device 120 may be a RIS, a NCR, an intelligent relay device, or other devices with functions of signal forwarding and relay.

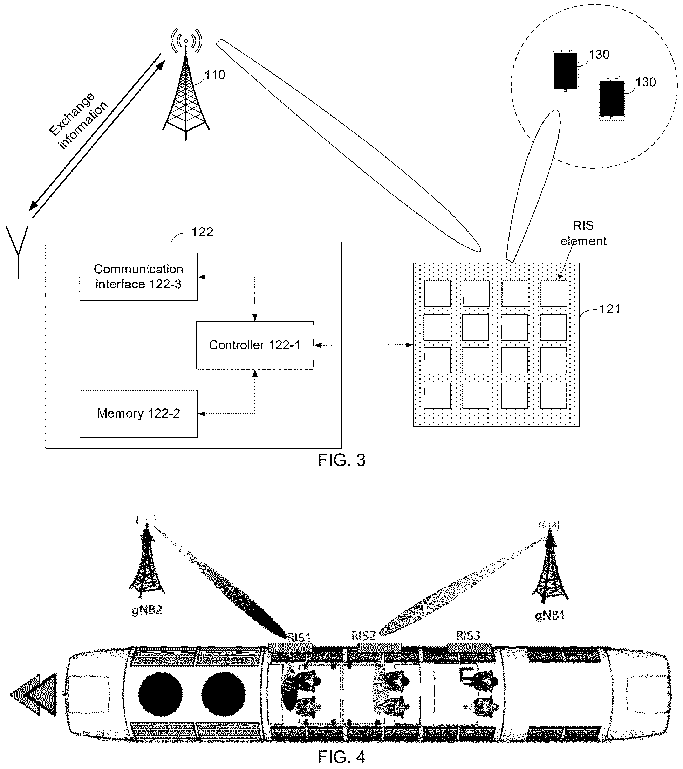

In some embodiments, as shown in FIG. 3, the relay reflection device 120 includes: a reflection module 121 and a control module 122. For example, in a case where the relay reflection device 120 is RIS, the above-mentioned reflection module 121 may be a signal relay module of the RIS (i.e., RIS Forwarding (RIS-Fwd)); the above-mentioned control module 122 may be a communication and control module of the RIS (i.e., a RIS mobile termination (RIS-MT)).

The reflection module 121 is a reflection array composed of antenna elements, and is configured to adjust incident beams in different manner according to codebooks for different antenna elements (a codebook is used to control a frequency spectrum, a phase, an amplitude, a polarization value of each antenna element), so as to implement changes for incident beams in different amplitudes, widths, frequency shifts, and incident angles, and changes in single-beam reflection, multi-beam reflection, diffuse scattering, refraction, transmission, etc.

For example, the reflection module 121 may reflect the incident beams to a designated area (such as a coverage blind area of the base station) according to a beam indication (i.e., codebook) provided by the control module 122 to serve the UE in that area. For example, in the embodiments of the present disclosure, the reflection module 121 may adjust the incident beams from the base station 110 to outgoing beams towards the terminal device 130.

The control module 122 includes a controller 122-1, a memory 122-2, and a communication interface 122-3.

The controller 122-1 is configured to transmit relay beam indication (i.e., codebook) to the reflection module 121 and control a working state of the reflection module 121.

For example, the controller 122-1 may control a working state of the reflection module 121 according to an indication from the base station 110, such as: ON-OFF state (controlling the reflection module to work or not to work, etc.); power control (controlling an amplitude of a reflected beam of reflection module 121); relay beam indication (i.e., a codebook for antenna array of reflection module 121).

It can be understood that a codebook represents a relative relationship between an incident beam and an outgoing beam. Therefore, for a reflection array, a codebook may also be referred to as a beam indication.

The memory 122-2 is configured store codebooks.

The communication interface 122-3 is configured to exchange information with other devices. For example, the control module 122 may exchange information with the base station 110 via the communication interface 122-3.

For example, the control module 122 may receive control information (such as codebook changing information, etc.) sent from the base station 110 via the communication interface 122-3, and send working state information of RIS, configuration information of RIS, and codebook set of RIS, etc., to the base station via the communication interface 122-3.

In some embodiments, the control module 122 may send sensor capability information and a measurement result of a sensor module 123 to base station 110 via the communication interface 122-3.

For example, the communication interface 122-3 may exchange information with other devices via manners of Narrow band Internet of Things (NB-loT), 5th generation mobile communication technology (5G), wireless fidelity (WiFi), etc.

Optionally, a structural form of the relay reflection device 120 may include the following.
(1) The reflection module 121 and the control module 122 are co-located.
(2) A control module 122 controls a reflection module 121, and these two modules are not co-located; and the reflection module 121 and the control module 122 may be connected with each other through wired or wireless manners.
(3) A control module 122 controls a plurality of reflection modules 121, and the control module 122 is not co-located with a reflection module 121. For example, a control module 122 may simultaneously control N reflection modules 121. The control module 122 may receive control information from the base station 110 for N reflection modules 121, and report state information of N reflection modules 121 to the base station 110.

Taking the relay reflection device 120 being a RIS, the reflection module 121 being a RIS-Fwd, and control module 122 being a RIS-MT as an example, the structural form of relay reflection device 120 may be illustrated belowin combination with the accompanying drawings in the specification.

For example, as shown in FIG. 4, the RIS may be deployed on a carriage of a high-speed train, and the RIS-Fwd is integrated with the RIS-MT as a whole, and a working frequency band and beams for the RIS-MT is a subset of these for the RIS-Fwd.

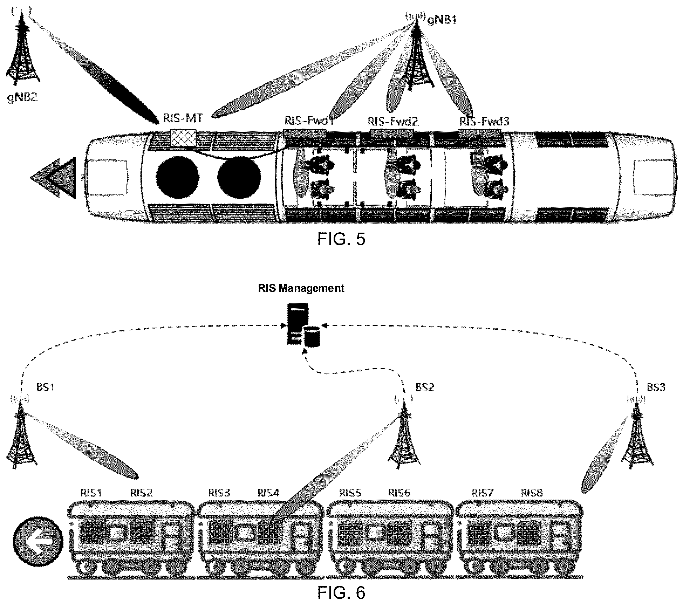

For example, as shown in FIG. 5, the RIS may be deployed on the carriage of a high-speed train, and one RIS-MT may be deployed separately from a plurality of RIS-Fwds. In this structural form, in a forwarding direction, the RIS-MT may detect beams from a neighboring cell before the RIS-Fwd; in an opposite direction of the forwarding direction, the RIS-MT may detect beams from a neighboring cell later than the RIS-Fwd.

It should be noted that, in addition to being deployed on the carriage of a high-speed train, the above structural forms are also applicable to other types of mobile vehicles, such as subways and light rails, drones, vehicles on highways, ferries, etc., which are not limited in the embodiments of the present disclosure.

The terminal device 130 is configured to perform communication according to electromagnetic waves radiated by the relay reflection device 120.

For example, the terminal device 130 may be a UE (user equipment), such as mobile phones, pads, desktop computers, laptops, handheld computers, notebook computers, ultra-mobile personal computers (UMPCs), netbooks, as well as cellular phones, personal digital assistants (PDAs), augmented reality (AR), virtual reality (VR) devices, or the like, and a specific form of the terminal device 130 is not particularly limited in the embodiments of the present disclosure.

Taking the relay reflection device 120 being a RIS as an example of RIS, scenarios involved in the communication system provided in the embodiments of the present disclosure may be illustrated with reference to the accompanying drawings in the specification.

In some embodiments, as shown in FIG. 6, it is a schematic diagram of an application scenario of the communication system provided in the embodiments of the present disclosure. There is a RIS management entity, base stations, and RISs deployed on a mobile vehicle in the scenario. It can be seen that in this scenario, RISs needs to perform handover between base stations during a movement process.

The above-mentioned RIS management entity is configured to manage a codebook library of RIS, deployment information of RIS, and authorization for RIS. The RIS management entity may be deployed in a base station, a core network domain, a core network network element, an operation administration and maintenance (OAM) backend, a radio access network (RAN) domain, etc. For example, the above-mentioned core network network element may be: an access and mobility management function (AMF), service management function (SMF), point coordination function (PCF), user port function (UPF), application function (AF), etc.

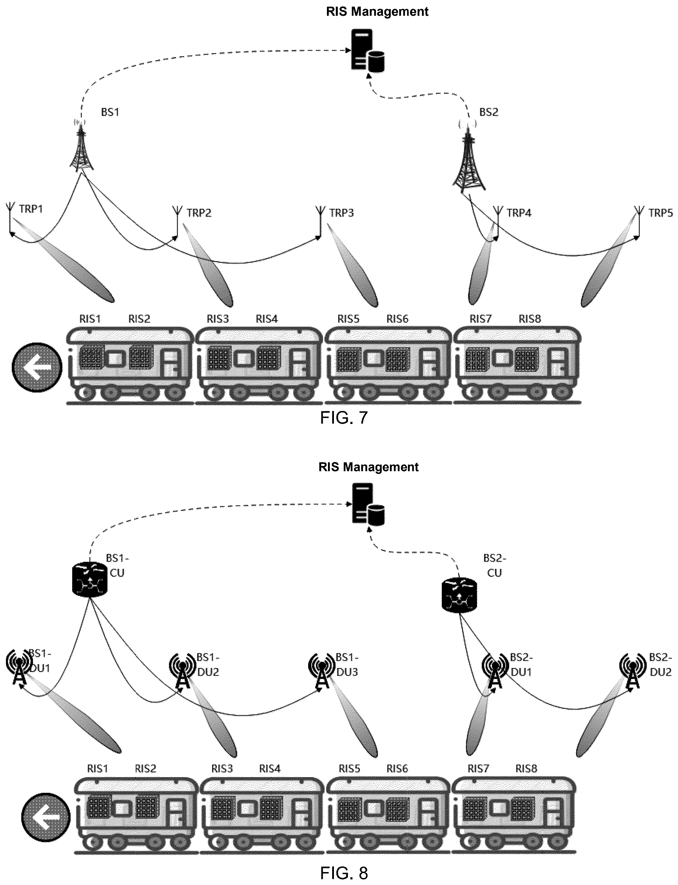

In some embodiments, a base station shown in FIG. 1 may include one or more transmission reception points (TRPs) to enhance a coverage area of the base station. As shown in FIG. 7, it is a schematic diagram of an application scenario of another communication system provided in the embodiments of the present disclosure. There is a RIS management entity, base stations, TRPs, and RISs deployed on a mobile vehicle in the scenario. It can be seen that in this scenario, RISs need to perform handover between different TRPs of the same base station and between different TRPs of different base stations during a movement process.

In some embodiments, an architecture of the base station shown in FIG. 1 may be a separated architecture for a centralized unit (CU) and a distributed unit (DU). As shown in FIG. 8, it is a schematic diagram of an application scenario of yet another communication system provided in the embodiments of the present disclosure. There is a RIS management entity, DUs and CUs of base stations, and RISs deployed on a mobile vehicle in the scenario. It can be seen that in this scenario, RISs needs to perform handover between base stations and between different CUs of the same base station during a movement process.

It should be noted that the system architecture and application scenes described in the embodiments of the present disclosure are intended to illustrate the technical solutions of the embodiments of the present disclosure more clearly, and do not constitute a limitation on the technical solutions provided in the embodiments of the present disclosure. A person of ordinary skill in the art may appreciate that with the evolution of the system architecture and the emergence of new service scenes, the technical solutions provided in the embodiments of the present disclosure are also applicable to similar technical problems.

A mobility management method provided in the embodiments of the present disclosure is introduced as follows.

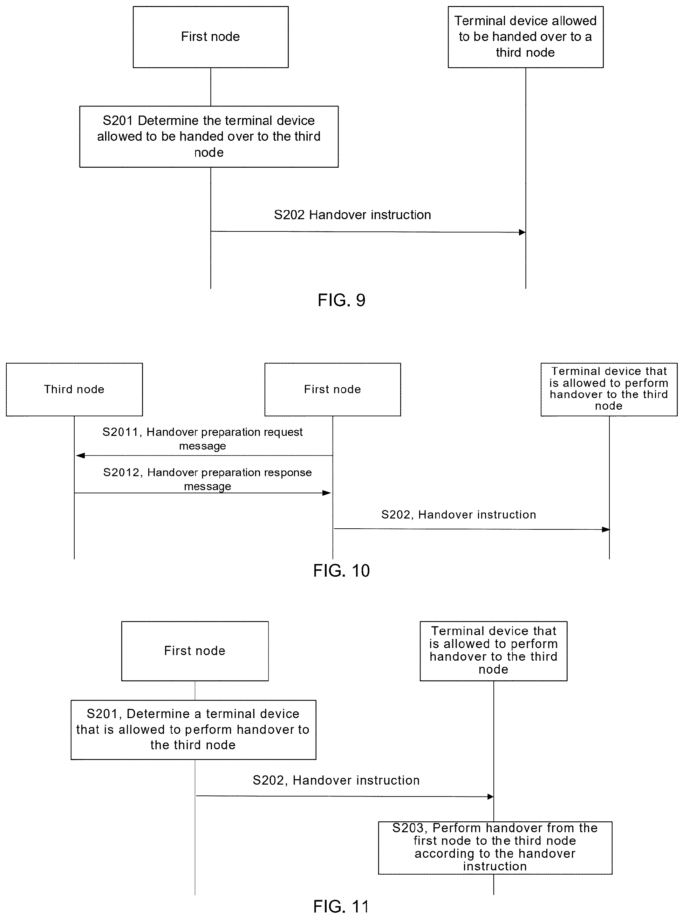

As shown in FIG. 9, a mobility management method is provided in the embodiments of the present disclosure, and the method includes the following S201-S202.

In S201, a first node determines a terminal device that is allowed to perform handover to a third node.

The first node may be a source wireless network device in a handover process; the first node includes at least one of: a base station, an intra-site cell of the base station, a distributed wireless unit, or a wireless transceiver node.

The third node is a target wireless network device in a handover process; the third node includes at least one of: a base station, an intra-site cell of the base station, a distributed wireless unit, or a wireless transceiver node.

It should be noted that the above handover process may be referred to as a handover procedure. In the handover procedure, a wireless network device that is leaving is usually referred to as a source wireless network device, for example, a source cell is referred to as a source cell. A wireless network device to be entered is referred to as a target wireless network device, for example, a target cell is referred to as a target cell.

In some embodiments, the above-mentioned S201 may be implemented as: the first node determining the terminal device that is allowed to perform handover to the third node from terminal devices accessing to the first node via a second node.

The second node may be the relay reflection device 120 as shown in FIG. 1. For example, the second node is a reconfigurable intelligent surface, a network controllable relay device, or an intelligent relay device.

The above-mentioned terminal devices accessing to the first node via the second node refers to terminal devices that establish a wireless connection with the first node via wireless signals relayed by the reflection module managed by the second node.

It can be understood that in a scenario where the second node is deployed on a mobile vehicle, the second node may adjust an incident beam from the first node to an outgoing beam towards the terminal device, to improve the signal quality of a terminal device. In this way, the terminal device may establish a wireless connection with the first node via the wireless signals relayed by the second node.

In some embodiments, as shown in FIG. 10, the above-mentioned S201 may be implemented as the following S2011-S2012.

In S2011, the first node sends a handover preparation request message to the third node.

In some embodiments, the handover preparation request message includes at least one of:
a handover reason;
a first list, where the first list comprises at least one identifier of at least one terminal device preparing to perform handover to the third node;
relevant information of a second node preparing to perform handover to the third node (the second node preparing to perform handover to the third node may be a second node corresponding to at least one terminal device preparing to perform handover to the third node); or
a preset codebook table, where the preset codebook table includes a plurality of codebooks, and wireless network information or geographic area information respectively corresponding to the plurality of codebooks.

In some embodiments, the above-mentioned handover reason includes at least one of:
terminal device group handover;
group handover of terminal devices accessing to the first node via the second node; or
group handover of terminal devices accessing to the first node via the second node caused by the second node changing a beam or changing a codebook.

The above-mentioned group handover refers to handover for a plurality of terminal devices. The above-mentioned group handover of terminal devices refers to that a plurality of terminal devices within a coverage area of the first node meet a handover condition. The above-mentioned group handover of terminal devices accessing to the first node via the second node refers to that a plurality of terminal devices accessing to the first node via the second node meet a handover condition.

In some embodiments, the relevant information of the second node preparing to perform handover to the third node includes at least one of:
at least one identifier of at least one reflection module included in the second node, and a number of the at least one reflection module included in the second node; it can be understood that the second node may include a plurality of reflection modules, but not all of the terminal devices served by the plurality of reflection modules may participate in the same handover procedure, that is, there may be a plurality of handover procedures for completing, therefore, the at least one reflection module may be all or a portion of the reflection modules included in the second node;
an identifier of a first reflection module, where the first reflection module is a reflection module for which a codebook is to be changed among the at least one reflection module included in the second node; it can be understood that the first reflection module is a reflection module that needs to assist a terminal device that is to perform handover to change a codebook among the at least one reflection module;
a recommended codebook to be changed or an index of the recommended codebook to be changed corresponding to the first reflection module; for example, an index of a codebook may be a sequence number of the codebook;
geographic information of the at least one reflection module included in the second node; for example, the geographic information may be real-time position information; or
geographic information of the second node.

In some embodiments, the preset codebook table may be a set of codebooks pre-configured according to the position information of the second node (or position information of respective reflection modules included in the second node); or the preset codebook table may be a set of codebooks pre-configured according to optimal beam information measured by the second node.

For example, a route for vehicle movement may be divided into different road sections according to geographical locations, and an optimal codebook may be pre-set for each road section; during the movement of the vehicle, position information of a target reflection module may be used to determine a road section where the target reflection module is located; then a target codebook corresponding to the target reflection module may be determined according to the road section where the target reflection module is located.

For example, a codebook may be preset according to an optimal beam measured by the second node; during the movement of the vehicle, the target codebook corresponding to the target reflection module of the second node may be determined according to a change in an incident beam measured by the second node.

It can be understood that in a case where the handover preparation request message carries the preset codebook table, the third node may determine a codebook that needs to be changed for the reflection module of the second node according to the geographic information or wireless network information of the second node from the preset codebook table. In this way, compared to the method of determining the codebook by real-time detection of the information of the second node (there may be interference and errors in a method relying on actual measurement), determining the codebook from the preset codebook table may reduce measurement and signaling overhead, reduce time delay, and improve the accuracy of codebook changing.

In S2012, the first node receives a handover preparation response message sent from the third node.

In some embodiments, the above-mentioned handover preparation response message includes at least one of:
a second list, where the second list comprises at least one identifier of at least one terminal device that is allowed to perform handover to the third node;
a wireless resource configuration of the terminal device that is allowed to perform handover to the third node in the third node;
an identifier of a second node that is allowed to perform handover to the third node;
relevant information of a second reflection module, where the second reflection module is a reflection module that agrees to change a codebook or a beam of the second node;
time offsets for respective terminal devices in the second list to access to the third node; or
signal quality thresholds for respective terminal devices in the second list to access to the third node.

The relevant information of the second reflection module includes at least one of:
an identifier of the second reflection module;
an identifier of a new beam for the second reflection module;
an identifier of a new codebook for the second reflection module;
a second time offset, where the second time offset is a time offset for the second reflection module enabling the new codebook or the new beam; or
a first distance offset, where the first distance offset is a distance offset for the second reflection module enabling the new codebook or the new beam.

In some embodiments, the above-mentioned S201 may further be implemented as: determining the terminal device that is allowed to perform handover to the third node from terminal devices accessing to the first node via the second node in response to that a preset condition for performing handover from the first node to the third node is met.

The above-mentioned preset condition may include at least one of:
a signal quality for the first node measured by the terminal device being lower than a first preset threshold;
a signal quality for the first node measured by the second node being lower than a second preset threshold;
a difference between a signal quality for the third node measured by the second node and a signal quality for the first node measured by the second node exceeding a third preset threshold;
determining that a target reflection module included in the second node meets a codebook changing condition; for example, some implementations of the first node determining that the target reflection module included in the second node meets the codebook changing condition may refer to the following b1-b3, which will not be repeated herein;
receiving first indication information, wherein the first indication information is used to indicate that the target reflection module meets the codebook changing condition. For example, some implementations of the first node receiving the first indication information may refer to the following c1-c4, which will not be repeated herein.

For example, the above-mentioned signal quality of the first node may be obtained by measuring a reference signal of the first node. For example, the reference signal of the first node may be a synchronization signal and physical broadcast channel block (SSB) or a channel state information reference signal (CSI-RS).

The above-mentioned signal quality may include at least one of: a reference signal receiving power (RSRP), a reference signal receiving quality (RSRQ), a signal to interference plus noise ratio (SINR), a channel quality indication (CQI), or a rank indicator (RI), etc.

At least one of the above-mentioned first preset threshold, second preset threshold, and third preset threshold may be pre-configured by the first node, the RIS management entity, the core network network element, or a third-party server.

In some embodiments, the above-mentioned codebook changing condition includes at least one of:
a distance between a position of the target reflection module and a geographic area corresponding to a target codebook in a preset codebook table being shorter than or equal to a second distance offset;
a time required for the target reflection module from the position of the target reflection module to reach or enter the geographic area corresponding to the target codebook in the preset codebook table being shorter than or equal to a third time offset;
a signal quality of a neighboring cell of the first node being higher than a signal quality of a cell of the first node by a fourth preset threshold;
the signal quality of the neighboring cell of the first node being greater than or equal to a fifth preset threshold; or
the signal quality of the cell of the first node being lower than or equal to a sixth preset threshold.

At least one of the above-mentioned second distance offset, third time offset, fourth preset threshold, fifth preset threshold, and sixth preset threshold may be pre-configured by the first node, the RIS management entity, the core network network element, or a third-party server.

It should be noted that in the above-mentioned S2011-S2012, if there is no direct inter-station interface between the first node and the third node (for example, in 5G, an inter-station interface of the base stations is an Xn interface), the first node and the third node may transmit information through an interface of a mobility management function entity of the core network (for example, in 5G core network, a mobility management function entity is AMF). For example, taking the 5G core network as an example, an interface between the base station and the AMF is the N2 interface, and the first node and the third node may transmit information through the N2 interface.

In some other embodiments, if the first node and the third node are two DUs in a CU of the same base station, then the above S201 may be implemented as the following a1-a3.

In a1, the first node acquires a measurement report of the second node.

The measurement report includes measurement results of a plurality of measured cells, and the plurality of measured cells include a cell of the first node and a neighboring cell of the first node.

In some embodiments, the above-mentioned measurement result includes at least one of:
an identifier of the measured cell;
signal quality information of the measured cell;
an identifier of a measured beam in the measured cell;
signal quality information of a measured beam;
an incident angle of the measured beam with respect to a reflection module included in the second node (or an incident angle of the measured beam).

For example, in the scenario shown in FIG. 6, the identifier of the measured cell may be an identifier of a cell in a base station or an of a frequency point. In the scenario shown in FIG. 7, the identifier of the measured cell may be an identifier of a measured TPR. In the scenario shown in FIG. 8, the identifier of the measured cell may be an identifier of a measured DU.

For example, the above-mentioned signal quality information of the measured cell may include a RSRP, a RSRQ, a SINR, etc., of the measured cell.

For example, the above-mentioned identifier of the measured beam of the measured cell may be an index of a downlink reference signal included in the measured beam. For example, an index of a SSB, a CSI-RS, or other downlink reference signals.

For example, the above-mentioned signal quality information of the measured beam may be a signal quality of a downlink reference signal included in the measured beam. For example, a RSRP, a RSRQ, or a SINR of a SSB, a CSI-RS, or other downlink reference signals.

For example, the above-mentioned incident angle of the measured beam with respect to the reflection module included in the second node may also be an angle of arrival or a direction of arrival of the measured beam with respect to the reflection module included in the second node.

In a2, the first node sends the measurement report of the second node to a CU.

In a3, the CU determines the terminal device that is allowed to perform handover to the third node from the terminal devices accessing to the first node via the second node according to the measurement report.

In some embodiments, the CU may make an internal judgment according to the measurement report, so as to determine the terminal device that is allowed to perform handover to the third node from the terminal devices accessing to the first node via the second node.

For example, the internal judgment includes:
(1) CU determines whether a terminal device accessing to the first node via the second node is capable of performing handover to the third node; and which terminal devices accessing to the first node via the second node is capable of performing handover to the third node.
(2) CU determines whether the reflection module included in the second node needs to change the codebook; if a codebook needs to be changed, determines the codebook to be changed.

It can be understood that in the scenario shown in FIG. 8, CU serves as a centralized processing unit, and in the handover process across DUs within the same CU, CU needs to perform centralized processing and judgment.

In S202, the first node sends a handover instruction to the terminal device that is allowed to perform handover to the third node.

The handover instruction is used to indicate to perform handover from the first node to the third node.

In some embodiments, the handover instruction may include at least one of:
a wireless resource configuration provided by the third node for the terminal device that is allowed to perform handover to the third node;
a signal quality threshold for accessing to the third node;
a first time offset for accessing to the third node.

It can be understood that the wireless resource configuration provided by the third node for the terminal device that is allowed to perform handover to the third node is pre-configured by the third node and is sent to the first node.

It can be understood that at least one of the signal quality threshold and the first time offset mentioned above is pre-configured by the first node, the RIS management entity, the core network network element, or the third-party server.

In some embodiments, as shown in FIG. 11, the above-mentioned method may further include the following S203.

In S203, a terminal device performs handover from the first node to the third node according to the handover instruction.

In some embodiments, the above-mentioned S203 may be implemented as: the terminal device immediately performing handover from the first node to the third node upon receiving a handover instruction.

In some embodiments, in a case where the handover instruction includes the first time offset, the above S203 may be implemented as: the terminal device performing handover from the first node to the third node after receiving the handover instruction and after a duration corresponding to the first time offset has passed.

In some embodiments, in a case where the handover instruction includes the signal quality threshold for accessing to the third node, the above S203 may be implemented as: the terminal device performing handover from the first node to the third node upon receiving the handover instruction and detecting that the signal quality of the third node meets the signal quality threshold.

In some embodiments, in a case where the handover instruction includes the first time offset and the signal quality threshold for accessing to the third node, the above S203 may be implemented as: the terminal device performing handover from the first node to the third node in response to that the signal quality of the third node meeting the signal quality threshold upon receiving the handover instruction and detecting that the signal quality of the third node meets the signal quality threshold.

In some embodiments, the above-mentioned method further includes: the terminal device initiating a handover failure process in response to failing to perform handover to the third node within a preset time period after receiving the handover instruction.

For example, the above-mentioned preset time period may be preset by the first node or the third node and may be sent to the terminal device. Within the preset time period after the terminal device receives the handover instruction, if the terminal device does not detect that the signal quality of the third node meets the preset threshold, the terminal device may initiate a handover failure process.

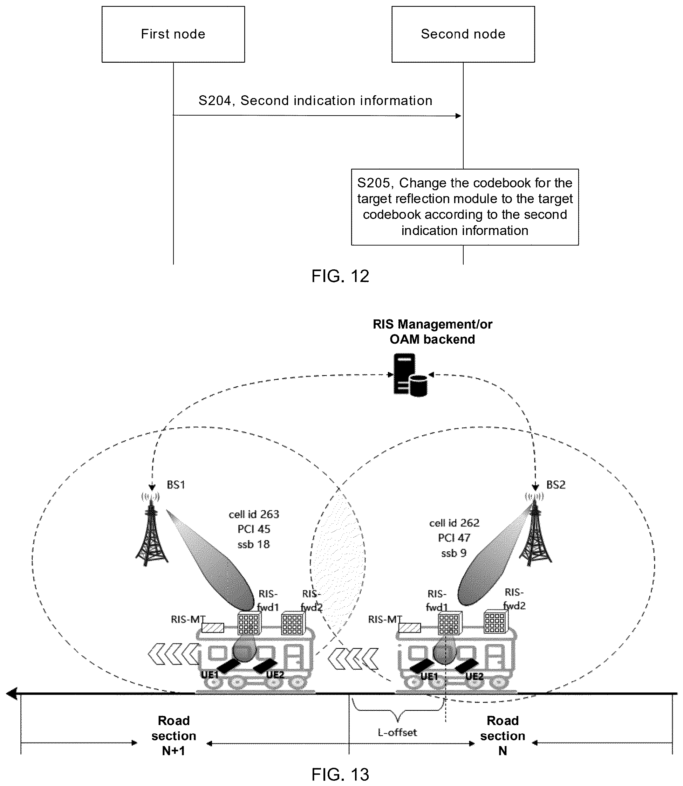

In some embodiments, as shown in FIG. 12, the above-mentioned method further includes the following S204-S205.

In S204, the first node sends second indication information to the second node. Correspondingly, the second node receives the second indication information sent from the first node.

The second indication information is used to indicate to change a codebook for a target reflection module included in the second node to a target codebook.

In some embodiments, the second indication information includes at least one of:
the target codebook or an identifier of the target codebook;
an identifier of the target reflection module;
a fourth time offset, where the fourth time offset is a time offset for the target reflection module enabling the target codebook;
a third distance offset, where the third distance offset is a distance offset for the target reflection module enabling the target codebook; or
a codebook changing condition.

In S205, the second node changes the codebook for the target reflection module to the target codebook according to the second indication information.

In some embodiments, the above-mentioned S205 may be implemented as: the second node immediately changing the codebook for the target reflection module to the target codebook upon receiving the second indication information.

In some embodiments, in response to that the second indication information includes the third distance offset, the above-mentioned S205 may be implemented as: after receiving the second indication information, the second node changing the codebook for the target reflection module to the target codebook in response to that a distance between a position of the target reflection module and a geographic area corresponding to the target codebook reaches the third distance offset.

In some embodiments, in response to that the second indication information includes the fourth time offset, the above-mentioned S205 may be implemented as: after receiving the second indication information, the second node changing the codebook for the target reflection module to the target codebook in response to that a time required for the target reflection module from the position of the target reflection module to reach or enter the geographic area corresponding to the target codebook reaches the fourth time offset.

In some embodiments, in response to that the second indication information includes the codebook changing condition, the above-mentioned S205 may be implemented as: the second node changing the codebook for the target reflection module to the target codebook in response to that the target reflection module meets the codebook changing condition.

It can be understood that based on the method provided in the embodiments of the present disclosure, a plurality of terminal devices under the coverage of the second node is enabled to perform preparation for handover in advance and acquire an access configuration of the third node before the second node changes a codebook. Then, after the second node changes the codebook (at which point a reflection module of the second node begins to relay a signal of the third node), the terminal devices may then access to the third node. In this way, in the scenario where the second node is deployed on the mobile vehicle, a success rate for a terminal device in the vehicle to perform cell handover may be improved.

In some embodiments, the above-mentioned first node determining that the target reflection module included in the second node meets the codebook changing condition may be implemented as the following b1-b3.

In b1, the first node receives a measurement report of the second node.

In some embodiments, the above-mentioned measurement report may further include position information of the target reflection module. For example, the above-mentioned position information of the target reflection module may be absolute position information (the absolute position information of the target reflection module is used to indicate a position of the target reflection module on the Earth's surface) or relative position information (the relative position information of the target reflection module may be a position of the target reflection module with respect to a preset reference point), etc., which is not limited in the embodiments of the present disclosure.

In some embodiments, the above-mentioned measurement report may be sent from the second node (e.g., the control module of the second node) to the first node; or the above-mentioned measurement report may be sent from the terminal device to the first node.

For example, the control module of the second node may send the measurement report to the first node in a case of determining that the above measurement results meet the handover condition.

For example, the terminal device may determine whether the signal quality of a cell of the first node is lower than a preset threshold according to the above measurement results; and send the measurement report to the first node in a case where the signal quality of the cell of the first node is lower than the preset threshold.

For example, the first node may send a measurement report acquisition request to the second node; accordingly, the second node sends the measurement report to the first node in response to the measurement report acquisition request.

In b2, the first node determines whether the target reflection module meets a codebook changing condition according to the measurement report.

In some embodiments, in a case where the measurement report includes the position information of the target reflection module, it is possible to determine whether the target reflection module meets the codebook changing condition according to determining whether a distance between the position of the target reflection module and a geographic area corresponding to the target codebook in the preset codebook table is shorter than or equal to the second distance offset; or determining whether a time required for the target reflection module from the position of the target reflection module to reach or enter the geographic area corresponding to the target codebook in the preset codebook table is shorter than or equal to a third time offset.

In some embodiments, in a case where the measurement report includes wireless network information (such as an identifier of the measured cell and signal quality information of the measured cell), it is possible to determine whether the target reflection module meets the codebook changing condition according to determining whether a signal quality of a neighboring cell of the first node is higher than a signal quality of a cell of the first node by a fourth preset threshold; or determining whether the signal quality of the neighboring cell of the first node is greater than or equal to a fifth preset threshold; or determining whether the signal quality of the cell of the first node is lower than or equal to a sixth preset threshold.

In b3, in response to that the target reflection module meets the codebook changing condition, the first node determines the target codebook according to the measurement report.

In some embodiments, in a case where there is a preset codebook table in the first node, the first node may determine the target codebook corresponding to the target reflection module from the preset codebook table according to the measurement report.

In some embodiments, in a case where there is no preset codebook table in the first node, the first node may determine the target codebook in real time according to the measurement report. For example, the first node may select a codebook with the highest matching degree with the measurement report from an original codebook library as the target codebook according to the measurement report.

It can be understood that the first node may determine whether the target reflection module meets the codebook changing condition according to the measurement report, and determine the target codebook in a case where the target reflection module meets the codebook changing condition. Furthermore, the second node may change the codebook of the target reflection module to the target codebook after the terminal device covered by the target reflection module completes the handover preparation process. In this way, the target reflection module may relay the signal of the third node, allowing the terminal device to perform handover to the third node.

In some embodiments, whether the target reflection module meets the codebook changing condition may further be determined by the second node. At the same time, the second node may further send first indication information to the first node in a case of determining that the target reflection module meets the codebook changing condition. For example, the corresponding process may be implemented as the following c1-c4.

In c1, the second node acquires the measurement report.

For example, the content of the measurement report may be referred to the above-mentioned b1, which will not be repeated herein.

In c2, the second node determines whether the target reflection module meets a codebook changing condition according to the measurement report.

For example, the implementation of c2 may be found in b2 above, which will not be repeated herein.

In c3, in response to that the target reflection module meets the codebook changing condition, the second node determines the target codebook according to the measurement report.

For example, the implementation of c3 may be found in b3 above, which will not be repeated herein.

In c4, the second node sends first indication information to the first node and/or the third node.

The first indication information is used to indicate that the target reflection module meets the codebook changing condition.

The target codebook is a new codebook for the target reflection module.

In some embodiments, the first indication information may include at least one of:
an identifier of the target reflection module;
an identifier of the target codebook or the target codebook.

It can be understood that the second node may determine the target codebook corresponding to the target reflection module according to the measurement report in a case where the target reflection module meets the codebook changing condition, and send the first indication information to the first node or the third node. In this way, the first node may perform the handover process in response to the first indication information.

For ease of understanding, the mobility management method provided in the embodiments of the present disclosure may be illustrated below in the form of examples and in combination with application scenarios.

It should be noted that for ease of description, the following is taken the first node being a source cell, the third node being a target cell, the second node being a RIS, the reflection module of the first node being a RIS-Fwd, the control module of the first node being a RIS-MT, and the terminal device being a UE as examples for illustration.

Scenario 1: handover scenario with crossing base stations.

For example, as shown in FIG. 13, separated RISs (RIS-MTs and a plurality of RIS-Fwds deployed at different positions in the carriage) is deployed on a carriage of a the high-speed train, which travels along a fixed route and moves from the coverage area of BS2 to the coverage area of BS1. During this process, RIS-Fwd reflects the beam of BS2 to cover the UE inside the carriage in a case where the RIS-Fwd is within the coverage area of BS2, and reflects the beam of BS1 to cover the UE inside the carriage in a case where the RIS-Fwd is within the coverage area of BS1.

For example, information of the beam may be represented as: a cell identifier and a beam identifier. The cell identifier may be represented as at least one of: a cell global identifier (GCI), a public land mobile network (PLMN) identifier (ID), a cell ID, a base station ID, or a physical cell identifier (PCI). The beam identifier may be an index of a reference signal carried by a service beam. For example, the reference signal includes at least one of: a SSB, a CSI-RS, a tracking RS, a modulation reference signal (DMRS), a positioning RS, or an interference RS.

As shown in FIG. 13, the beam information of the BS2 may be represented as: cell id 262, PCI 47, ssb 9; the beam information of the BS2 may be represented as: cell id 263, PCI 45. ssb 18.

The BS2 is a source cell, and "cell id 262, PCI 47, ssb 9" is the beam information of the source cell; the BS1 is a target cell, and "cell id 263, PCI 45, ssb 18" is the beam information of the target cell.

In the process shown in FIG. 13, the RIS-MT completed the handover from BS2 to BS1, RIS-Fwd implemented codebook changing (from a codebook for reflecting the beam of BS2 to a codebook for reflecting the beam of BS1), and the UE in the carriage completed the handover from the source base station BS2 to the target base station BS1.

For example, this process may be implemented as d1-d8.

In d1, BS2 receives a measurement report.

The measurement report may include: a measurement result of signals from a cell of the source base station BS2, and a measurement result of signals from a cell of the neighboring base station BS1.

In some embodiments, the above-mentioned measurement report may be a measurement report of wireless signals of BS2 and BS1 detected by a RIS-MT within the coverage area of BS2. The above-mentioned measurement report may be sent to BS2 by a RIS-MT within the coverage area of BS2.

For example, the RIS-MT sends the measurement report to BS2 in a case where the RIS-MT determines that the measurement result of signals from the cell of the source base station BS2 and the measurement result of signals from a cell of the neighboring base station BS1 meet a preset handover condition.

The handover condition may include at least one of:
a difference between a reference signal strength of the cell of the neighboring base station BS1 and a reference signal strength of the cell of the source base station BS2 exceeding a preset threshold B;
the reference signal strength of the cell of the neighboring base station BS1 being higher than or equal to a preset threshold C, and the reference signal strength of the cell of the source base station BS2 being lower than a preset threshold D.

For example, in a case where the RIS-MT detects that the RIS-Fwd1 managed by the RIS-MT meets a preset codebook changing condition, the RIS-MT sends a measurement report to BS2.

For example, the above-mentioned preset codebook changing condition may include: RIS-Fwd1 being away from entering a road section corresponding to anext preset codebook with a distance of (L-offset) (in the embodiments shown in FIG. 13, the RIS-Fwd1 may enter a road section N+1 from a road section N). L-offset is a preset distance offset, which is pre-configured by the base station and sent to RIS-MT.

In some embodiments, the above-mentioned measurement report may be a measurement report of wireless signals of BS2 and BS1 detected by a UE (a UR covered by a beam from BS2 and reflected by the RIS-MT) within the coverage area of BS2. The above-mentioned measurement report may be sent from a UE within the coverage area of BS2 to BS2.

For example, the UE1 within the coverage area of RIS-MT sends a measurement report to BS2 in a case where the UE1 detects that the RSRP of the beam of BS2 is lower than a preset threshold A (the preset threshold A may be pre-configured by the base station and sent to UE1, and this threshold is set to determine whether the signal quality covered by the source cell has weakened to a certain limit).

In some embodiments, in a case where the BS2 detects that RIS-Fwd1 meets the predetermined codebook changing condition for the RIS, the BS2 sends a measurement report acquisition request to RIS-MT, and then RIS-MT sends a measurement report to BS2 in response to the measurement report acquisition request.

For example, BS2 may measure whether RIS-Fwd1 meets the preset codebook changing condition for RIS according to the following manners.

The BS2 is wirelessly connected to the RIS-MT, and the position information of RIS-MT is determined based on the positioning measurement function of the base station (such as positioning based on a uplink signal sent from RIS-MT). Furthermore, the position information of RIS-Fwd1 is calculated according to a relative position relationship between RIS-Fwd1 and RIS-MT (the relative position relationship between RIS-Fwd1 and RIS-MT may be obtained from the RIS management entity, the OAM management backend, the core network, or the RIS-MT). Thus, whether RIS-Fwd1 meets the preset codebook changing condition for RIS is determined based on the position information of RIS-Fwd1.

In d2, BS2 determines that the UE under coverage of RIS-MT meets the handover condition according to the measurement report.

In d3, BS2 sends a handover request to BS1.

For example, the handover request may include at least one of:
a handover reason;
a UE id list for UEs about to perform handover (e.g., including IDs of UE1 and UE2);
an ID of a RIS-MT about to perform handover (for example, an ID of a RIS-MT may be a radio network temporary identity (RNTI); or an international mobile subscriber identification number (IMSI) of the RIS-MT, or other types of IDs assigned by the base station to the RIS-MT);
RIS-MT IDs corresponding to a UE list for UEs about to perform handover;
a number of RIS-Fwds managed by RIS-MT and IDs of the RIS-Fwds (for example, in the scenario shown in FIG. 13, the number of RIS-Fwds is 2, and the IDs of RIS-Fwds are 1 and 2, respectively);
IDs of one or more RIS-Fwds corresponding to the UE list for UEs about to perform handover (for example, the RIS-MT may manage a plurality of RIS-Fwds, but not all of the UEs covered by the every RIS-Fwd may participate in the same handover procedure, that is, there may be a plurality of handover procedures for completing);
a wireless resource configuration of each UE in the source cell in the UE lisr for UEs about to perform handover;
a RIS-Fwd id list for RIS-Fwds about to change a beam/codebook (for example, in the scenario shown in FIG. 13, an ID of RIS-Fwd1);
a recommended codebook to be changed or an index of the recommended codebook to be changed;
a real-time geographic position of each RIS-Fwd about to change a beam/codebook;
a movement route of a vehicle; or
a preset codebook table, where the preset codebook table includes a plurality of codebooks, and wireless network information or geographic area information respectively corresponding to the plurality of codebooks.

It should be noted that if there is no direct inter station interface (e.g., an Xn interface) between BS2 and BS1, BS2 may send a handover request to BS1 through an interface (e.g., N2 interface) with a mobility management function entity of the core network (e.g., AMF).

In d4, BS1 sends a handover acknowledge message to BS2.

In some embodiments, BS1 sends the handover acknowledge message to BS2 in a case where the BS1 determines to accept the handover request from RIS-MT, UE1, and/or UE2.

For example, a handover acknowledge message may include at least one of:
a UE id list for UEs that are allowed to access to the target cell;
a wireless resource configuration of each UE that is allowed to access to the target cell;
an ID of a RIS-MT that is allowed to access to the target cell;
a RIS-Fwd id list for RIS-Fwds of the second node confirmed by the target cell and that agree to change a codebook or beam;
an identifier of a new beam or codebook corresponding to a RIS-Fwd of the second node confirmed by the target cell and that agrees to change a codebook or beam;
a time offset or distance offset for each RIS-Fwd to change a beam or codebook.

The time offset is used to indicate that RIS-MT may wait for a certain time period after receiving the handover message before controlling RIS-Fwd1 to change a codebook. The time offset should be determined according to a vehicle speed and a distance between the RIS-Fwd1 and a coverage area of BS1, ensuring that RIS-Fwd1 enters the coverage area of BS1 before changing the codebook. Only then can UE1 and UE2 receive the wireless signal of BS1 with stronger signal strength.

Similarly, the purpose of setting the distance offset is the same as the purpose of setting thetime offset. The RIS-MT measures position information of the RIS-MT itself in real time after receiving the handover message, and controls RIS-Fwd1 to change the codebook to a new codebook after the distance offset is met.

It should be noted that if there is no direct inter station interface (e.g., an Xn interface) between BS2 and BS1, BS1 may send a handover acknowledge message to BS2 through an interface (for example, an N2 interface between the AMF and the base station) with a mobility management function entity of the core network (e.g., AMF).

In d5, BS2 sends a handover instruction to a UE in the UE list for UEs that are allowed to access to BS1.

For example, in the scenario shown in FIG. 13, a list of UEs that are allowed to access to BS1 includes UE1 and UE2.

For example, the above-mentioned handover instruction includes at least one of:
a UE id list for UEs that are allowed to access to BS1, and a wireless resource configuration for each UE in the target cell;
a time offset for each UE to access to BS1 (i.e., the UE may wait for a certain time period after receiving the handover instruction before initiating access to BS1, and this time offset should ensure that the UE's access behavior occurs after RIS-Fwd1 changes to the new codebook);
a signal quality threshold that UE needs to meet upon accessing BS1 (i.e., the UE may only access to BS1 after detecting that the signal quality of BS1 meets the signal quality threshold).

For example, the above-mentioned signal may be a downlink reference signal, such as SSB or CSI-RS, etc.; the above-mentioned signal quality threshold may be a threshold for RSRP, RSRQ, SINR, etc.

In d6, BS2 sends a codebook changing instruction to RIS-MT.

For example, the codebook changing instruction may include at least one of:
a RIS-Fwd id list for RIS-Fwds about to change a codebook (in the scenario shown in FIG. 13, an ID of RIS-Fwd1);
a codebook to be changed or an identifier of a codebook to be changed;
a time offset or distance offset for a RIS-Fwd about to change a codebook to enable a codebook.

In some embodiments, in a case where there is a preset codebook table, a preset codebook for a next road section corresponding to RIS-Fwd may be determined from the preset codebook table.

In d7, UE1 and UE2 perform handover from BS2 to BS1 in response to the received handover instruction.

For example, UE1 and UE2 may immediately access to BS1 upon receiving the handover instruction.

For example, UE1 and UE2 may access to BS1 after receiving the handover instruction and an indicated time offset has passed.

For example, UE1 and UE2 may access to BS1 after receiving a handover instruction and detecting that the signal quality (such as RSRP, RSRQ, or SINR) of a downlink reference signal of BS1 has reached a preset threshold.

For example, UE1 and UE2 may access to BS1 after receiving the handover instruction and measuring the signal quality (such as RSRP, RSRQ, or SINR) of the downlink reference signal of BS1 reaching to the preset threshold after the indicated time offset has passed.

In some embodiments, the above method further includes: the UE initiates a handover failure process in response to failing to perform handover to the third node within a preset time period after receiving the handover instruction. For example, BS2 or BS1 may set a predetermined time window for the UE. After the UE receives the handover instruction, if the UE does not detect a BS1 signal that meets the preset threshold within the predetermined time window, the UE triggers a handover failure process.

In d8, the RIS-MT changes the codebook in response to the received codebook changing instruction.

For example, the RIS-MT may immediately change the codebook upon receiving the codebook changing instruction.

For example, after receiving a codebook changing instruction, the RIS-MT may change the codebook after a distance between the RIS-MT and the geographic area corresponding to the codebook to be changed meets the preset distance offset.

For example, after receiving a codebook changing instruction, the RIS-MT may change the codebook after a time required for the RIS-MT from the position of teh RIS-MT reaching or entering the geographic area corresponding to the codebook to be changed meets the preset time offset.

For example, the RIS-MT may change the codebook in a case of receiving the codebook change instruction and determining that RIS-MT meets the codebook changing condition.

Scenario 2: handover scenario with crossing DUs within a CU of the same base station.

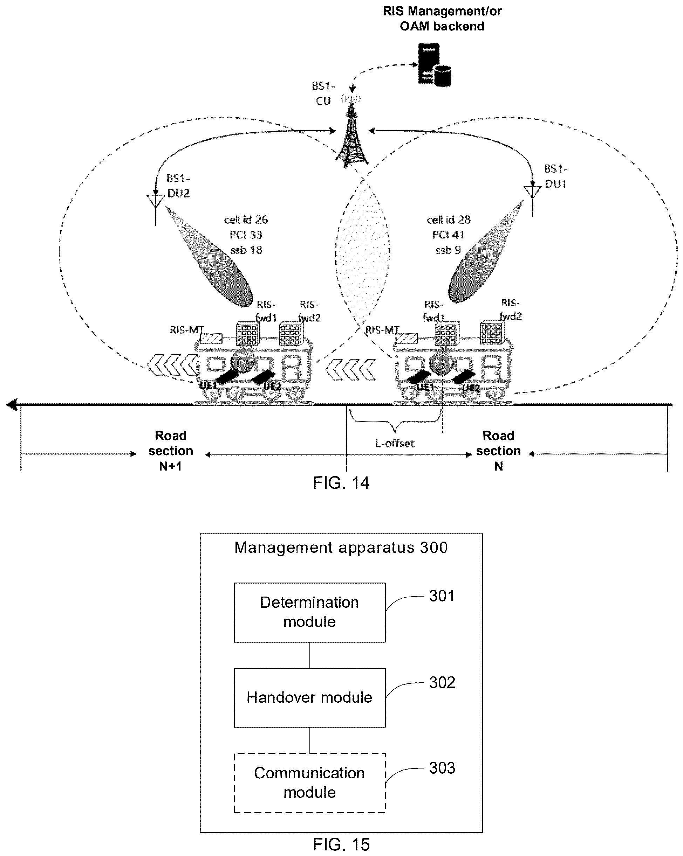

For example, as shown in FIG. 14, the DUs to which the two coverage areas traversed by carriages of a high-speed train belongs are both managed by the CU of the same base station BS, and therefore it is an intra station handover. BS1-DU1 is a source cell, and BS1-DU2 is a target cell.

For example, handover performed crossing DUs may include the following e1-e7.

In e1, BS1-DU1 receives a measurement report.

The above-mentioned measurement report may be sent from RIS-MT; or the above-mentioned measurement report may be sent from UE1 or UE2.

For example, the implementation of e1 mentioned above may refer to d1 mentioned above, which will not be repeated herein.

In e2, BS1-DU1 forwards the measurement report to BS1-CU.

In e3, BS1-CU makes an internal judgment according to the measurement report.

For example, the internal judgment includes:
(1) BS1-CU determines whether UE1 and UE2 may perform handover to BS1-DU2.
(2) BS1-CU determines whether RIS-Fwd1 and RIS-Fwd2 need to change their codebooks;lf a codebook needs to be changed, a codebook to be changed is determined.

In e4, in a case of determining that UE1 and UE2 are capable of performing handover to BS1-DU2, BS1-CU generates a handover instruction and sends the handover instruction to UE1 and UE2.

For example, the implementation of e4 mentioned above may refer to d5 mentioned above, which will not be repeated herein.

In e5, BS1-CU generates a codebook changing instruction and sends the codebook changing instruction to RIS-MT in a case of determining that RIS-Fwd1 and RIS-Fwd2 need to change their codebooks.

For example, the implementation of e5 mentioned above may refer to d6 mentioned above, which will not be repeated herein.

In e6, RIS-MT controls RIS-Fwd1 and RIS-Fwd2 to change their codebooks in response to the codebook changing instruction.

For example, the implementation of e6 mentioned above may refer to d7 mentioned above, which will not be repeated herein.

In e7, UE1 and UE2 perform handover, and access to BS1-DU2 in response to the handover instruction.

For example, the implementation of e7 mentioned above may refer to d8 mentioned above, which will not be repeated herein.

It can be understood that in the scenario shown in FIG. 14, CU serves as a centralized processing unit, and in the handover process across DUs within the same CU, CU needs to perform centralized processing and judgment.

The solutions provided in the embodiments of the present disclosure are introduced above from the perspective of methods. It can be understood that, in order to implement the above functions, the management apparatus includes at least one of corresponding hardware structures or software modules for implementing various functions. Those skilled in the art should easily realize that the embodiments of the present disclosure are able to be implemented in the form of hardware or a combination of hardware and computer software in combination with units and steps of algorithms described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the embodiments of the present disclosure.

The management apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 15 is a structural schematic diagram of a management apparatus provided in the embodiments of the present disclosure, and the management apparatus may be applied to the above-mentioned first node, so as to perform the mobility management method provided in the above-mentioned method embodiments. As shown in FIG. 15, the management apparatus 300 includes: a determination module 301 and a handover module 302. In other embodiments, the management apparatus 300 may further include a communication module 303.

The determination module 301 is configured to determine a terminal device that is allowed to perform handover to a third node.

The handover module 302 is configured to send a handover instruction to the terminal device, where the handover instruction is used to indicate the terminal device to perform handover from the first node to the third node.

In some embodiments, the determination module 301 is configured to determine the terminal device that is allowed to perform handover to the third node from terminal devices accessing to the first node via the second node.

In some embodiments, the handover instruction includes at least one of: a wireless resource configuration provided by the third node for the terminal device that is allowed to perform handover to the third node; a signal quality threshold for accessing to the third node; a first time offset for accessing to the third node.

In some embodiments, the above-mentioned determination module 301 is configured to: send a handover preparation request message to the third node; and receive a handover preparation response message sent from the third node, where the handover preparation response message is generated based on the handover preparation request message.

In some embodiments, the handover preparation request message includes at least one of: a handover reason; a first list, where the first list includes at least one identifier of at least one terminal device preparing to perform handover to the third node; relevant information of a second node preparing to perform handover to the third node; a preset codebook table, where the preset codebook table includes a plurality of codebooks, and network area information respectively corresponding to the plurality of codebooks; or a preset codebook table, where the preset codebook table includes a plurality of codebooks, and geographic area information respectively corresponding to the plurality of codebooks.

In some embodiments, in response to that the handover preparation request message includes the handover reason, the handover reason includes at least one of: terminal device group handover; group handover of terminal devices accessing to the first node via the second node; or group handover of terminal devices accessing to the first node via the second node caused by the second node changing a beam or changing a codebook.

In some embodiments, in response to that the handover preparation request message includes the relevant information of the second node, the relevant information of the second node includes at least one of: at least one identifier of at least one reflection module included in the second node; an identifier of a first reflection module, where the first reflection module is a reflection module for which a codebook is to be changed among the at least one reflection module included in the second node; a recommended codebook to be changed or an index of the recommended codebook to be changed corresponding to the first reflection module; geographic information of the at least one reflection module included in the second node; or geographic information of the second node.

In some embodiments, the handover preparation response message includes at least one of: a second list, where the second list includes at least one identifier of at least one terminal device that is allowed to perform handover to the third node; a wireless resource configuration of the terminal device that is allowed to perform handover to the third node in the third node; an identifier of a second node that is allowed to perform handover to the third node; relevant information of a second reflection module, where the second reflection module is a reflection module that agrees to change a codebook or a beam of the second node; time offsets for respective terminal devices in the second list to access to the third node; or signal quality thresholds for respective terminal devices in the second list to access to the third node.

In some embodiments, in response to that the handover preparation request message includes the relevant information of the second reflection module, the relevant information of the second reflection module includes at least one of: an identifier of the second reflection module; an identifier of a new beam for the second reflection module; an identifier of a new codebook for the second reflection module; a second time offset, where the second time offset is a time offset for the second reflection module enabling the new codebook or the new beam; or a first distance offset, where the first distance offset is a distance offset for the second reflection module enabling the new codebook or the new beam.

In some embodiments, the above-mentioned determination module 301 is configured to determine the terminal device that is allowed to perform handover to the third node in response to that a preset condition for performing handover from the first node to the third node is met.

In some embodiments, the above-mentioned preset condition includes at least one of: a signal quality for the first node measured by the terminal device being lower than a first preset threshold; a signal quality for the first node measured by the second node being lower than a second preset threshold; a difference between a signal quality for the third node measured by the second node and a signal quality for the first node measured by the second node exceeding a third preset threshold; determining that a target reflection module included in the second node meets a codebook changing condition; or receiving first indication information, where the first indication information is used to indicate that the target reflection module meets the codebook changing condition.

In some embodiments, the above-mentioned codebook changing condition includes at least one of: a distance between a position of the target reflection module and a geographic area corresponding to a target codebook in a preset codebook table being shorter than or equal to a second distance offset; a time required for the target reflection module from the position of the target reflection module to reach or enter the geographic area corresponding to the target codebook in the preset codebook table being shorter than or equal to a third time offset; a signal quality of a neighboring cell of the first node being higher than a signal quality of a cell of the first node by a fourth preset threshold; the signal quality of the neighboring cell of the first node being greater than or equal to a fifth preset threshold; or the signal quality of the cell of the first node being lower than or equal to a sixth preset threshold.

In some embodiments, the communication module 303 is configured to send second indication information to the second node, where the second indication information is used to indicate to change a codebook for a target reflection module included in the second node to a target codebook.

In some embodiments, the above-mentioned second indication information includes at least one of: the target codebook; an identifier of the target codebook; an identifier of the target reflection module; a fourth time offset, where the fourth time offset is a time offset for the target reflection module enabling the target codebook; a third distance offset, where the third distance offset is a distance offset for the target reflection module enabling the target codebook; or a codebook changing condition.

In some embodiments, the communication module 303 is further configured to receive a measurement report of the second node before sending the second indication information, where the measurement report includes measurement results of a plurality of measured cells, and the plurality of measured cells include a cell of the first node and a neighboring cell of the first node; and the determination module 301 is further configured to determine whether the target reflection module meets a codebook changing condition according to the measurement report.

In some embodiments, a measurement result of the above-mentioned measured cell includes at least one of: an identifier of the measured cell; channel quality information of the measured cell; an identifier of a measured beam in the measured cell; channel quality information of the measured beam; or an incident angle of the measured beam with respect to a reflection module included in the second node.

In some embodiments, the determination module 301 is further configured to determine the target codebook according to the measurement report in response to that the target reflection module meets the codebook changing condition.

In some embodiments, the second node is a reconfigurable intelligent surface, a network controllable relay device, or an intelligent relay device.

In some embodiments, a codebook is used to represent a correspondence between an incident beam and an outgoing beam.

In some embodiments, the first node is a source wireless network device in a handover process; the first node includes at least one of: a base station, an intra-site cell of the base station, a distributed wireless unit, or a wireless transceiver node.

In some embodiments, the third node is a target wireless network device in a handover process; the third node includes at least one of: a base station, an intra-site cell of the base station, a distributed wireless unit, or a wireless transceiver node.

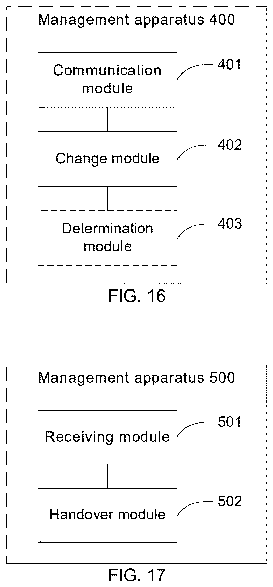

FIG. 16 is a structural schematic diagram of a management apparatus provided in the embodiments of the present disclosure, and the management apparatus may be applied to the above-mentioned second node, so as to perform the mobility management method provided in the above-mentioned method embodiments. As shown in FIG. 16, the management apparatus 400 includes a communication module 401 and a change module 402. In other embodiments, the management apparatus 400 may further include a determination module 403.

The communication module 401 is configured to receive second indication information sent from a first node; where the second indication information is used to indicate to change a codebook for a target reflection module included in the second node to a target codebook.

The change module 402 is configured to change the codebook for the target reflection module to the target codebook according to the second indication information.

In some embodiments, the second indication information includes at least one of: the target codebook; an identifier of the target codebook; an identifier of the target reflection module; a fourth time offset, where the fourth time offset is a time offset for the target reflection module enabling the target codebook; a third distance offset, where the third distance offset is a distance offset for the target reflection module enabling the target codebook; or a codebook changing condition.

In some embodiments, the change module 402 is configured to immediately change the codebook for the target reflection module to the target codebook upon receiving the second indication information.

In some embodiments, in response to that the second indication information includes the third distance offset, the change module 402 is configured, after receiving the second indication information, change the codebook for the target reflection module to the target codebook in response to that a distance between a position of the target reflection module and a geographic area corresponding to the target codebook reaches the third distance offset.

In some embodiments, in response to that the second indication information includes the fourth time offset, the change module 402 is configured, after receiving the second indication information, to change the codebook for the target reflection module to the target codebook in response to that a time required for the target reflection module from the position of the target reflection module to reach or enter the geographic area corresponding to the target codebook reaches the fourth time offset.

In some embodiments, in response to that the second indication information includes the codebook changing condition, the change module 402 is configured to change the codebook for the target reflection module to the target codebook in response to that the target reflection module meets the codebook changing condition.

In some embodiments, the communication module 401 is further configured to acquire a measurement report, where the measurement report comprises measurement results of a plurality of measured cells, and the plurality of measured cells include a cell of the first node and a neighboring cell of the first node; and the determination module is configured to determine whether the target reflection module meets a codebook changing condition according to the measurement report.

In some embodiments, the communication module 401 is further configured to send first indication information to the first node and/or the third node in response to that the target reflection module meets the codebook changing condition, where the first indication information is used to indicate that the target reflection module meets the codebook changing condition.

In some embodiments, the determination module 403 is further configured to determine the target codebook according to the measurement report in response to that the target reflection module meets the codebook changing condition, where the target codebook is a new codebook for the target reflection module.

FIG. 17 is a structural schematic diagram of a management apparatus provided in the embodiments of the present disclosure, and the management apparatus may be applied to the above-mentioned terminal device, so as to perform the mobility management method provided in the above-mentioned method embodiments. As shown in FIG. 17, the management apparatus 500 includes: a receiving module 501 and a handover module 502.

The receiving module 501 is configured to receive a handover instruction, where the handover instruction is used to indicate to perform handover from a first node to a third node.

The handover module 502 is configured to perform handover from the first node to the third node according to the handover instruction.

In some embodiments, the handover module 502 is configured to immediately perform handover from the first node to the third node upon receiving a handover instruction.

In some embodiments, the handover module 502 is configured to perform handover from the first node to the third node after receiving the handover instruction and after a duration corresponding a first time offset has passed.

In some embodiments, the handover module 502 is configured to perform handover from the first node to the third node in response to that a signal quality of the third node meets a signal quality threshold after receiving the handover instruction and after a duration corresponding a first time offset has passed.

In some embodiments, the handover module 502 is configured to initiate a handover failure process in response to failing to perform handover to the third node within a preset time period after receiving the handover instruction.

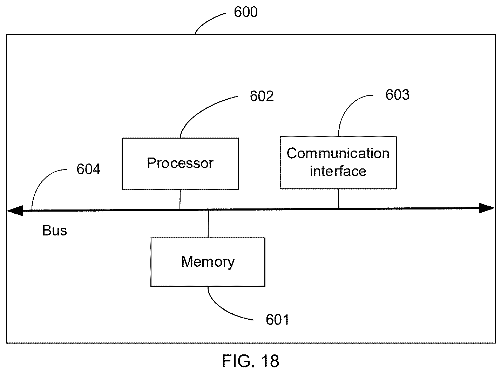

In a case where the functions of the above-mentioned integrated modules are implemented in the form of hardware, another possible structure of a communication apparatus involved in the above-mentioned embodiments is provided in the embodiments of the present disclosure. As shown in FIG. 18, the communication apparatus 600 includes a memory 601, a processor 602, a communication interface 603, and a bus 604.

The memory 601 may be a read-only memory (ROM) or other types of static storage devices that can store static information and instructions, a random access memory (RAM), or other types of dynamic storage devices that can store dynamic information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 602 may implement or perform various exemplary logical blocks, modules and circuits described in combination with the embodiments of the present disclosure. The processor 602 may be a central processor, a general-purpose processor, a digital signal processor, an application specific integrated circuit, a field programmable gate array, or other programmable logic component, a transistor logic component, a hardware assembly, or any combination thereof. The processor 602 may implement or execute various illustrative logical blocks, modules and circuits described in conjunction with the embodiments of the present disclosure. The processor 602 may also be a combination that implements computing functions, for example, the processor 602 includes a combination of one or more microprocessors, a combination of a DSP (digital signal processor) and a microprocessor, or the like.

The communication interface 603 is configured to connect with other devices through a communication network. The communication network may be the Ethernet, a wireless access network, a wireless local area networks (WLAN), or the like.

In some embodiments, the memory 601 may exist independently from the processor 602, and the memory 601 may be connected to the processor 602 through the bus 604 for storing instructions or program codes. In a case where the processor 602 invokes and executes instructions or program codes stored in the memory 601, the mobility management method provided in the embodiments of the present disclosure may be implemented.

In embodiments, the memory 601 may be integrated with the processor 602.

The bus 604 may be an extended industry standard architecture (EISA) bus, or the like. The bus 604 may be classified as an address bus, a data bus, a control bus, or the like. For ease of representation, only one bold line is used in FIG. 18 for representing the bus 604, but it does not mean that there is only one bus or one type of bus.

A computer-readable storage medium (for example, a non-transitory computer-readable storage medium) is provided in some embodiments of the present disclosure, the computer-readable storage medium has stored computer program instructions, and the computer program instructions, upon being executed by a computer, enable the computer to perform the mobility management method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the mobility management method as described in any one of the above-mentioned embodiments.

The above descriptions are merely specific implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

## Claims

1. A mobility management method, **characterized by** being applied to a first node, wherein the method comprises:
determining a terminal device that is allowed to perform handover to a third node; and
sending a handover instruction to the terminal device, wherein the handover instruction is used to indicate the terminal device to perform handover from the first node to the third node.

2. The method according to claim 1, wherein determining the terminal device that is allowed to perform handover to the third node comprises:
determining the terminal device that is allowed to perform handover to the third node from terminal devices accessing to the first node via a second node.

3. The method according to claim 1, wherein the handover instruction comprises at least one of:
a wireless resource configuration provided by the third node for the terminal device that is allowed to perform handover to the third node;
a signal quality threshold for accessing to the third node;
a first time offset for accessing to the third node.

4. The method according to claim 1, wherein determining the terminal device that is allowed to perform handover to the third node comprises:
sending a handover preparation request message to the third node; and
receiving a handover preparation response message sent from the third node, wherein the handover preparation response message is generated based on the handover preparation request message.

5. The method according to claim 4, wherein the handover preparation request message comprises at least one of:
a handover reason;
a first list, wherein the first list comprises at least one identifier of at least one terminal device preparing to perform handover to the third node;
relevant information of a second node preparing to perform handover to the third node;
a preset codebook table, wherein the preset codebook table comprises a plurality of codebooks, and network area information respectively corresponding to the plurality of codebooks; or
a preset codebook table, wherein the preset codebook table comprises a plurality of codebooks, and geographic area information respectively corresponding to the plurality of codebooks.

6. The method according to claim 5, wherein in response to that the handover preparation request message includes the handover reason, the handover reason comprises at least one of:
terminal device group handover;
group handover of terminal devices accessing to the first node via the second node; or
group handover of terminal devices accessing to the first node via the second node caused by the second node changing a beam or changing a codebook.

7. The method according to claim 5, wherein in response to that the handover preparation request message comprises the relevant information of the second node, the relevant information of the second node comprises at least one of:
at least one identifier of at least one reflection module included in the second node;
an identifier of a first reflection module, wherein the first reflection module is a reflection module for which a codebook is to be changed among the at least one reflection module included in the second node;
a recommended codebook to be changed or an index of the recommended codebook to be changed corresponding to the first reflection module;
geographic information of the at least one reflection module included in the second node; or
geographic information of the second node.

8. The method according to claim 4, wherein the handover preparation response message comprises at least one of:
a second list, wherein the second list comprises at least one identifier of at least one terminal device that is allowed to perform handover to the third node;
a wireless resource configuration of the terminal device that is allowed to perform handover to the third node in the third node;
an identifier of a second node that is allowed to perform handover to the third node;
relevant information of a second reflection module, wherein the second reflection module is a reflection module that agrees to change a codebook or a beam of the second node;
time offsets for respective terminal devices in the second list to access to the third node; or
signal quality thresholds for respective terminal devices in the second list to access to the third node.

9. The method according to claim 8, wherein in response to that the handover preparation request message comprises the relevant information of the second reflection module, the relevant information of the second reflection module comprises at least one of:
an identifier of the second reflection module;
an identifier of a new beam for the second reflection module;
an identifier of a new codebook for the second reflection module;
a second time offset, wherein the second time offset is a time offset for the second reflection module enabling the new codebook or the new beam; or
a first distance offset, wherein the first distance offset is a distance offset for the second reflection module enabling the new codebook or the new beam.

10. The method according to claim 4, wherein determining the terminal device that is allowed to perform handover to the third node comprises:
in response to that a preset condition for performing handover from the first node to the third node is met, determining the terminal device that is allowed to perform handover to the third node.

11. The method according to claim 10, wherein the preset condition comprises at least one of:
a signal quality for the first node measured by the terminal device being lower than a first preset threshold;
a signal quality for the first node measured by the second node being lower than a second preset threshold;
a difference between a signal quality for the third node measured by the second node and a signal quality for the first node measured by the second node exceeding a third preset threshold;
determining that a target reflection module included in the second node meets a codebook changing condition;
receiving first indication information, wherein the first indication information is used to indicate that the target reflection module meets the codebook changing condition.

12. The method according to claim 11, wherein the codebook changing condition comprises at least one of:
a distance between a position of the target reflection module and a geographic area corresponding to a target codebook in a preset codebook table being shorter than or equal to a second distance offset;
a time required for the target reflection module from the position of the target reflection module to reach or enter the geographic area corresponding to the target codebook in the preset codebook table being shorter than or equal to a third time offset;
a signal quality of a neighboring cell of the first node being higher than a signal quality of a cell of the first node by a fourth preset threshold;
the signal quality of the neighboring cell of the first node being greater than or equal to a fifth preset threshold; or
the signal quality of the cell of the first node being lower than or equal to a sixth preset threshold.

13. The method according to claim 2, further comprising:
sending second indication information to the second node, wherein the second indication information is used to indicate to change a codebook for a target reflection module included in the second node to a target codebook.

14. The method according to claim 13, wherein the second indication information comprises at least one of:
the target codebook;
an identifier of the target codebook;
an identifier of the target reflection module;
a fourth time offset, wherein the fourth time offset is a time offset for the target reflection module enabling the target codebook;
a third distance offset, wherein the third distance offset is a distance offset for the target reflection module enabling the target codebook; or
a codebook changing condition.

15. The method according to claim 13, further comprising:
receiving a measurement report of the second node before sending the second indication information, wherein the measurement report comprises measurement results of a plurality of measured cells, and the plurality of measured cells comprise a cell of the first node and a neighboring cell of the first node; and
determining whether the target reflection module meets a codebook changing condition according to the measurement report.

16. The method according to claim 15, wherein a measurement result of a measured cell comprises at least one of:
an identifier of the measured cell;
channel quality information of the measured cell;
an identifier of a measured beam in the measured cell;
channel quality information of the measured beam; or
an incident angle of the measured beam with respect to a reflection module included in the second node.

17. The method according to claim 15, further comprising:
in response to that the target reflection module meets the codebook changing condition, determining the target codebook according to the measurement report.

18. The method according to claim 2, wherein the second node is a reconfigurable intelligent surface, a network controllable relay device, or an intelligent relay device.

19. The method according to any one of claims 5 to 8, wherein a codebook is used to represent a correspondence between an incident beam and an outgoing beam.

20. The method according to claim 1, wherein the first node is a source wireless network device in a handover process; the first node comprises at least one of: a base station, an intra-site cell of the base station, a distributed wireless unit, or a wireless transceiver node.

21. The method according to claim 1, wherein the third node is a target wireless network device in a handover process; the third node comprises at least one of: a base station, an intra-site cell of the base station, a distributed wireless unit, or a wireless transceiver node.

22. A mobility management method, **characterized by** being applied to a second node, wherein the method comprises:
receiving second indication information sent from a first node; wherein the second indication information is used to indicate to change a codebook for a target reflection module included in the second node to a target codebook; and
changing the codebook for the target reflection module to the target codebook according to the second indication information.

23. The method according to claim 22, wherein the second indication information comprises at least one of:
the target codebook;
an identifier of the target codebook;
an identifier of the target reflection module;
a fourth time offset, wherein the fourth time offset is a time offset for the target reflection module enabling the target codebook;
a third distance offset, wherein the third distance offset is a distance offset for the target reflection module enabling the target codebook; or
a codebook changing condition.

24. The method according to claim 23, wherein changing the codebook for the target reflection module to the target codebook according to the second indication information comprises:
immediately changing the codebook for the target reflection module to the target codebook upon receiving the second indication information.

25. The method according to claim 23, wherein in response to that the second indication information comprises the third distance offset, changing the codebook for the target reflection module to the target codebook according to the second indication information comprises:
after receiving the second indication information, in response to that a distance between a position of the target reflection module and a geographic area corresponding to the target codebook reaches the third distance offset, changing the codebook for the target reflection module to the target codebook.

26. The method according to claim 23, wherein in response to that the second indication information comprises the fourth time offset, changing the codebook for the target reflection module to the target codebook according to the second indication information comprises:
after receiving the second indication information, in response to that a time required for the target reflection module from the position of the target reflection module to reach or enter the geographic area corresponding to the target codebook reaches the fourth time offset, changing the codebook for the target reflection module to the target codebook.

27. The method according to claim 23, wherein in response to that the second indication information comprises the codebook changing condition, changing the codebook for the target reflection module to the target codebook according to the second indication information comprises:
after receiving the second indication information, in response to that the target reflection module meets the codebook changing condition, changing the codebook for the target reflection module to the target codebook.

28. The method according to claim 22, further comprising:
acquiring a measurement report, wherein the measurement report comprises measurement results of a plurality of measured cells, and the plurality of measured cells comprise a cell of the first node and a neighboring cell of the first node; and
determining whether the target reflection module meets a codebook changing condition according to the measurement report.

29. The method according to claim 28, further comprising:
in response to that the target reflection module meets the codebook changing condition, sending first indication information to the first node and/or a third node, wherein the first indication information is used to indicate that the target reflection module meets the codebook changing condition.

30. The method according to claim 28, further comprising:
in response to that the target reflection module meets the codebook changing condition, determining the target codebook according to the measurement report, wherein the target codebook is a new codebook for the target reflection module.

31. A communication apparatus, **characterized by** comprising: a memory and a processor, wherein the memory is coupled to the processor, the memory is configured to store instructions executable for the processor, and the processor is configured, upon the instructions being executed, to perform the method according to any one of claims 1 to 21, or the method according to any one of claims 22 to 30.

32. A computer-readable storage medium, **characterized in that** computer instructions are stored on the computer-readable storage medium, upon the computer instructions being executed on an electronic device, the electronic device is enabled to perform the method according to any one of claims 1 to 21, or the method according to any one of claims 22 to 30.
